## Europäisches Patentamt
## European Patent Office
## Office européen des brevets

(11) Veröffentlichungsnummer: **0 087 648**
**B1**

(12) **EUROPÄISCHE PATENTSCHRIFT**

(45) Veröffentlichungstag der Patentschrift:
**15.10.86**

(51) Int. Cl.⁴: **F 16 B 13/12**

(21) Anmeldenummer: **83101320.6**

(22) Anmeldetag: **11.02.83**

(54) **Hülsenförmiger Spreizdübel.**

(30) Priorität: **16.02.82 CH 963/82**

(43) Veröffentlichungstag der Anmeldung:
**07.09.83 Patentblatt 83/36**

(45) Bekanntmachung des Hinweises auf die Patenterteilung:
**15.10.86 Patentblatt 86/42**

(84) Benannte Vertragsstaaten:
**AT DE FR GB IT NL**

(56) Entgegenhaltungen:
**DE-A-2 057 970**
**DE-C-102 544**
**DK-C-81 732**
**GB-A-1 534 298**
**GB-A-2 011 003**
**US-A-3 216 304**

(73) Patentinhaber: **Fäster GmbH & Co. KG Befestigungstechnik, Am Breitenbach 14, D-8901 Stettenhofen (DE)**

(72) Erfinder: **Bappert, Adolf, Hasenweg 365, CH- 4616 Kappel (CH)**
Erfinder: **Schefer, Arnold, Höhenweg 396, CH- 4616 Kappel (CH)**

(74) Vertreter: **Quehl, Horst M., Dipl.- Ing., Glattalstrasse 37, CH- 8052 Zürich (CH)**

EP 0 087 648 B1

## Beschreibung

Die Erfindung betrifft einen hülsenförmigen Spreizdübel aus Metall, mit einem durch eine Schraube in den Spreizbereich des Dubels einziehbaren Spreizorgan.

Spreizdübel dieser Art sind in zahlreichen Ausführungsformen bereits bekannt. Das Spreizorgan, in das das Gewinde einer Schraube eingreift, ist üblicherweise als gesondertes Organ in der Spreizhülse angeordnet und meist mit Mitteln zur Verdrehsicherung versehen. Die Spreizwirkung ergibt sich entweder allein durch die konische äussere Oberfläche des Spreizorgans oder durch an einem zylindrischen Spreizorgan angeformte keilförmige und rampenförmige Erhebungen, die an Gegenflächen oder Gegenkanten der Hülse beim Aufspreizen des Dübels angreifen. Beispiele solcher Dübel sind durch die DE-C- 835 521, DE-C- 1 038 740, DE-C- 2 637 797, DE-A- 2 810 324 und US-A- 3 216 304 bekannt. Die Dübelhülsen sind teilweise aus Kunststoff (DE-C- 1 038 740), aus Metallguss (DE-A- 835 521, US-A- 3 216 304) geformt oder nach Ausstanzen aus Blech hülsenförmig gebogen. Das Spreizorgan wird jedoch aus fertigungstechnischen Gründen im Giessverfahren in einer Form hergestellt und besteht z.B. aus Zinkdruckguss. Für einen solchen im Giessverfahren hergestellten Spreizdübel ist es auch bekannt (US-A- 3 216 304), die Spreizhülse mit dem Spreizorgan in einem Stück herzustellen und zwischen beiden einen Sollbruchbereich vorzusehen. Durch die GB-A-1 534 298 ist weiterhin ein aus Blech geformtes hülsenförmiges, ohne Schraube zu verwendendes Befestigungselement bekannt, an dessen Enden je ein Spreizorgan angeformt ist, das nach Zerstören von Sollbruchstellen die Hülsenenden aufspreizt.

Der vorliegenden Erfindung liegt die Aufgabe zugrunde, einen Dübel der eingangs genannten Art zu finden, der sich wesentlich einfacher herstellen lässt. Dies wird erfindungsgemäss erreicht, aufgrund der Merkmale des Patentanspruchs 1. Vorteilhaft bleiben bei der gemeinsamen Herstellung der Dübelhülse mit dem Spreizorgan aus einem gleichen Blechstück beide über einen Sollbruchbereich miteinander verbunden. Hierdurch wird erreicht, dass der Spreizdübel weniger Einzelteile, d.h. kein separates Spreizorgan, aufweist und das Spreizorgan auf einfache Weise sowohl eine Verdreh- als auch eine Verliersicherung erhält. Das Anformen des Spreizorgans am Dübel bedeutet, dass es aus dem gleichen Material besteht wie die Dübelhülse, d.h. mit der Dübelhülse in einem Stück geformt ist. Weitere Vorteile der Erfindung sowie Merkmale von vorteilhaften Ausgestaltungen der Erfindung sind der folgenden Beschreibung eines Ausführungsbeispiels anhand der Zeichnung zu entnehmen, Es zeigt:
Fig. 1 ein ausgestanztes Blechteil als Vorprodukt des Spreizdübels,

Fig. 2 eine Seitenansicht eines aus dem Blechteil nach Fig. 1 gebildeten Dübels, und
Fig. 3 eine zur Ansicht nach Fig. 2 um 90° versetzte Seitenansicht eines Teils des Dübels mit seinem Spreizbereich.

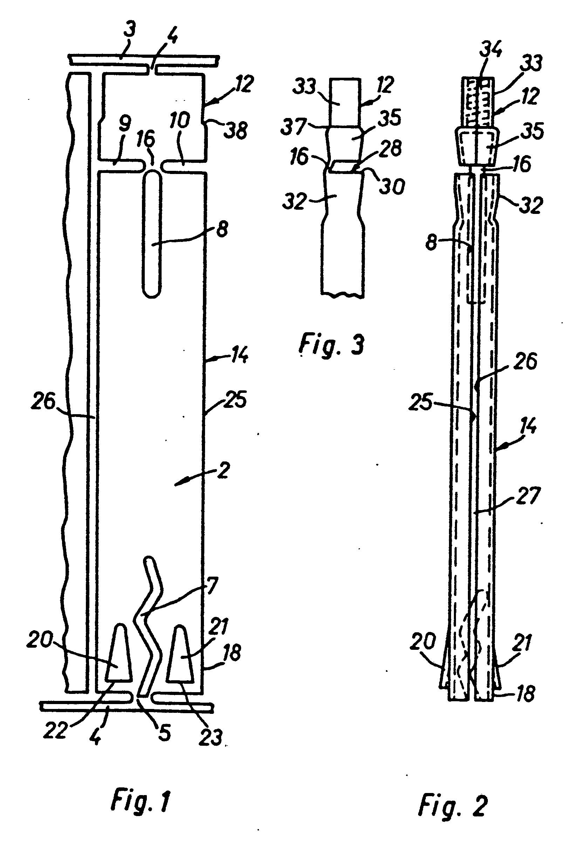

Das Ausführungsbeispiel der Fig. 1 bis 3 bezieht sich auf einen aus Stahlblech durch Stanzen und Biegen hergestellten Dübel, jedoch versteht es sich, dass ein Dübel aufgrund des ersichtlichen Allgemeinprinzips in entsprechender Anpassung seiner Formgebung auch aus anderen Materialien hergestellt sein kann. Die Herstellung des Dübels erfolgt fortlaufend aus einem Blechstreifen, wobei die einzelnen Schnitte nacheinander und auch gleichzeitig ausgeführt werden können. Die Fig. 1 zeigt ein noch ebenes ausgestanztes Blechteil 2, das durch die Randstreifen 3, 4 noch mit dem fortlaufenden Blechband verbunden ist, bevor es an den Stegstellen 4, 5 abgetrennt wird. Der Biegevorgang zur Herstellung der Hülsenform wird jedoch bereits vor dem Abtrennen des Blechteils 2 vom Blechband zumindest teilweise vorgenommen. Das Blechteil 2 hat schlitzförmige Ausschnitte 7, 8 und zwei gegeneinander gerichtete Einschnitte 9, 10. Die Einschnitte 9, 10 grenzen das Spreizorgan 12 bzw. das Blechteil zur Herstellung dieses Spreizorgans von dem Hülsenteil 14 des Dübels bzw. dem entsprechenden Blechteil ab. Statt den Einschnitten 9, 10 könnten auch Perforierungen vorgesehen werden, so dass entsprechend zwischen den Perforierungslöchern mehrere Verbindungsstege entsprechend dem Verbindungssteg 16 nach Fig. 1 verbleiben. Ausserdem sind an dem Blechteil 2 am Einführende 18 für eine nicht dargestellte Schraube nockenartige Ausprägungen 20, 21 vorgesehen, die an ihrer Schmalseite durch einen Einschnitt 22, 23 begrenzt sind. Die Ausgestaltung des Spreizdübels an diesem Einführende 18 ist an sich bekannt aus der eingangs genannten DE-A- 2 810 324 des gleichen Anmelders. Die Ausprägungen 20, 21 haben die Aufgabe beim Einschieben des Dübels in ein Bohrloch den Dübel radial zusammenzudrücken, so dass die durch den zickzackförmigen Schlitz 7 gebildeten Zähne im umgebenden Material zum Eingriff gelangen können.

Nachdem das Blechteil 2 nach Fig. 1 hülsenförmig zusammengebogen wurde, schliesst es zwischen seinen Längskanten 25, 26 einen durchgehenden Längsschlitz 27 ein, der in Zusammenwirkung mit dem diametral gegenüberliegenden Schlitz 8 im Spreizbereich des Dübels das Aufspreizen ermöglicht, wenn das Spreizorgan 12 in die Oeffnung 28 am Hülsenende hineingezogen wird. Der Schlitz 8 grenzt eng an den Verbindungssteg 16 zwischen dem Oeffnungsrand 30 der Spreizhülse und dem Spreizorgan 12 an, so dass die Verbindungsstelle des Verbindungssteges 16 zur Spreizhülse 14 entsprechend geschwächt ist und beim Einziehen des Spreizorgans in die Spreizhülse leicht durch Biege-, Scher- und/oder Zugkräfte zerstört wird.

Wie am besten der Darstellung der Fig. 3 zu entnehmen ist, haben sowohl das Spreizorgan 12 als auch der Endbereich 32 des Dübels eine konische Formgebung, die durch entsprechende Blechverformung angrenzend an das hülsenförmige Zusammenbiegen des Blechteils 2 oder gleichzeitig in das Blech eingeformt wurden. Das Einformen kann auch teilweise in bestimmten Umfangsbreiten des Dübels erfolgen, um die gewünschte Spreizwirkung zu ermöglichen.

Somit besteht das Spreizorgan 12 aus einem zylindrischen Teil 33 mit von aussen eingeprägten, in Fig. 2 angedeuteten inneren Gewindegängen 34 oder gewindeförmig angeordneten Erhebungen und einem konischen Spreizteil 35. Es versteht sich, dass der kleinste Durchmesser des Spreizteiles 35 kleiner ist als der Innendurchmesser des Hülsenendes 32, so dass der Spreizteil 35 beim Anziehen einer in die Gewindegänge 34 eingreifenden Schraube in das Hülsenende 32 hineingezogen wird und dieses aufspreizt, um den Dübel mit der umgebenden Wand eines Bohrloches zu verspannen. Um die Herstellung des Absatzes 37 zwischen dem zylindrischen Teil 33 und dem Spreizteil 35 des Spreizorganes 12 zu erleichtern, hat das Blechteil 2 in diesem Bereich entsprechend Abstufungen 38 an den seitlichen Schnittkanten.

Auf vorteilhafte Weise ist somit das Spreizorgan 12 ebenso wie die Dübelhülse 14 aus Blech gestanzt, gebogen und verformt und wird im gleichen Arbeitsgang mit der Herstellung der Dübelhülse hergestellt. Dadurch, dass zweckmässig bei dieser gemeinsamen Herstellung das Spreizorgan 12 nicht von der Dübelhülse abgetrennt wird, ergibt sich gleichzeitig durch den Verbindungssteg 16 eine Verdreh- und Verliersicherung.

**Patentansprüche**

1. Hülsenförmiger Spreizdübel aus Metall mit einem durch eine Schraube in den Spreizbereich des Dübels einziehbaren Spreizorgan, dadurch gekennzeichnet, dass das Spreizorgan (12) mit einem Spreizteil (35) und einem Gewindeteil (33), in den die Schraube eingreift, in einem Stück aus Blech besteht.

2. Spreizdübel nach Anspruch 1, dadurch gekennzeichnet, dass das Spreizorgan über einen Sollbruchbereich (16) mit der Spreizhülse (14) des Dübels verbunden ist.

3. Spreizdübel nach Anspruch 2, dadurch gekennzeichnet, dass der Sollbruchbereich aus mindestens einem die Endkante (30) der Dübelhülse mit dem Spreizteil (35) des Spreizorgans (12) verbindenden Steg (16) besteht.

4. Spreizdübel nach Anspruch 3, dadurch gekennzeichnet, dass ein Schlitz (8) der Dübelhülse (14) mit einem Ende an einer Ansatzstelle des Steges (16) angrenzt.

5. Spreizdübel nach Anspruch 1, dadurch gekennzeichnet, dass das Spreizorgan (12) einen zylindrischen Gewindeteil (33) mit einem Innengewinde (34) und einen an diesen in axialer Richtung angrenzenden konischen Spreizteil (35) aufweist.

6. Spreizdübel nach einem der Ansprüche 2 bis 4, dadurch gekennzeichnet, dass der Sollbruchbereich sich an einem vom Hülsenrand (30) schräg nach innen verlaufenden Wandteil (16) befindet, der an die Unterkante des des Spreizteils (35) des Spreizorgans (12) angrenzt.

7. Spreizdübel nach einem der Ansprüche 1 bis 6, dadurch gekennzeichnet, dass der dem Spreizorgan (12) zugekehrte Endbereich der Dübelhülse (32) sich von dem Spreizorgan weg konisch verjüngt.

8. Verfahren zur Herstellung des Spreizdübels nach Anspruch 1, dadurch gekennzeichnet, dass die Dübelhülse (14) und das Spreizorgan (12) durch Ausstanzen und Verformen gemeinsam aus einem gleichen Blechstück geformt werden.

9. Verfahren nach Anpruch 8, dadurch gekennzeichnet, dass die Dübelhülse (14) und das Spreizorgan (12) bis zur Fertigstellung miteinander verbunden bleiben, so dass die mindestens eine Verbindungsstelle zwischen beiden eine Sollbruchstelle bildet.

**Claims**

1- Tubular expanding dowel made from metal with an expanding member which can be drawn by a screw into the expanding zone of the dowel characterized, in that the expanding member (12) with an expanding part (35) and a threaded part (33), in which engages the screw, is made in one piece from sheet metal.

2. Expanding dowel according to claim 1, characterized in that the expanding member is connected via a desired breaking zone (16) with the expanding tube (14) of the dowel.

3. Expanding dowel according to claim 2, characterized in that the desired breaking zone comprises at least one web (16) connecting the terminal edge (30) of the dowel tube to the expanding part (35) of the expanding member (12).

4. Expanding dowel according to claim 3, characterized in that one end of a slot (8) of the dowel tube (14) is adjacent with a starting point of web (16).

5. Expanding dowel according to claim 1, characterized in that the expanding member (12) has a cylindrical threaded part (33) with an internal thread (34) and a conical expanding part (35) adjacent thereto in the axial direction.

6. Expanding dowel according to one of the claims 2 to 4, characterized in that the desired breaking zone is located on a wall part (16) which slopes inwards from the tube edge (30) and which is adjacent to the lower edge of the expanding part (35) of expanding member (12).

7. Expanding dowel according to one of the claims 1 to 6, characterized in that the terminal zone of the dowel tube (32) facing the expanding member (12) tapers conically away from the latter.

8. Method for the manufacture of the expanding dowel according to claim 1, characterized in that the dowel tube (14) and expanding member (12) are shaped by punching and working together from the same sheet metal piece.

9. Method according to claim 8, characterized in that the dowel tube (14) and expanding member (10) remain joined to one another up to completion, so that the at least one joining point between the two forms a desired breaking point.


**Revendications**

1. Cheville d'écartement tubulaire en métal comprenant un organe d'écartement pouvant être introduit par une vis dans la zone d'écartement de la cheville, caractérisée en ce que l'organe d'écartement (12), qui comporte une partie d'écartement (35) et une partie filetée (33), dans laquelle la vis s'engage, est constitué par une pièce en tôle.

2. Cheville d'écartement selon la revendication 1, caractérisée en ce que l'organe d'écartement est relié à la douille d'écartement (14) de la cheville par l'intermédiaire d'une zone de rupture contrôlée (16).

3. Cheville d'écartement selon la revendication 2, caractérisée en ce que la zone de rupture contrôlée est constituée par au moins une bande (16) reliant le bord extérieur (30) de la douille de cheville à la partie d'écartement (35) de l'organe d'écartement (12).

4. Cheville d'écartement selon la revendication 3, caractérisée en ce qu'une fente (8) de la douille de cheville (14) arrive à l'une de ses extrémités jusqu'à une zone prolongeant la bande (16).

5. Cheville d'écartement selon la revendication 1, caractérisée en ce que l'organe d'écartement (12) comprend une partie filetée cylindrique (33) comportant un filetage intérieur (34) et une partie d'écartement (35) conique contiguë à la partie cylindrique dans le sens axial.

6. Cheville d'écartement selon l'une des revendications 2 à 4, caractérisée en ce que la zone de rupture contrôlée se trouve dans une partie de paroi (16) qui part du bord (30) de la douille en s'étendant obliquement vers l'intérieur et est contiguë au bord inférieur de la partie d'écartement (35) de l'organe d'écartement (12).

7. Cheville d'écartement selon l'une des revendications 1 à 6, caractérisée en ce que la zone terminale de la douille de cheville (32) qui est du côté de l'organe d'écartement (12) va en s'amincissant suivant un cône en s'éloignant de l'organe d'écartement.

8. Procédé de fabrication de la cheville d'écartement selon la revendication 1, caractérisé en ce que la douille de cheville (14) et l'organe d'écartement (12) sont formés simultanément par estampage et formage à partir de la même pièce de tôle.

9. Procédé selon la revendication 8, caractérisé en ce que la douille de cheville (14) et l'organe d'écartement (12) restent reliés l'un à l'autre jusqu'au stade de la fabrication de sorte qu'il y a entre eux au moins une zone de liaison formant une zone de rupture contrôlée.

Fig. 1

Fig. 3

Fig. 2